# EUROPEAN PATENT APPLICATION

(11) **EP 4 560 571 A1**
(43) Date of publication of application: **28.05.2025**
(21) Application number: 23020519.7
(22) Date of filing: 23.11.2023
(51) Int. Cl.: G06T 7/11, G06T 7/194

(54) **PROMPT-BASED DEEP LEARNING FRAMEWORK FOR PRECISION AUTO-CONTOURING IN RADIOTHERAPY TREATMENT PLANNING**

(71) Applicant: Synaptiq Technologies S.r.l., Sebes, Alba (RO)
(72) Inventor: BICSI, Lucian, Suceava, Suceava County (RO); DUSE, Dragos, Sebes, Alba County (RO); GRAMA, Dragos, Vaslui, Vaslui County (RO); STANESCU, Marius, District 6, Bucharest (RO)
(74) Representative: Cosmovici, Paul

(57) **Abstract**

A system for performing an interactive tumor and/or organ-at-risk contouring process for radiotherapy treatment planning, comprising an initial auto-contouring process using a machine learning algorithm, a user reviewing and editing process of the initial predictions using contouring, tools such as brush, pen, select or others and an auto-refining process for updating the initial predictions based on edits using a machine learning algorithm.

## Description

### TECHNICAL FIELD OF INVENTION

The present invention relates generally to the field of medical imaging and radiation oncology. Specifically, it involves the development and application of Computer-Aided Detection (CAD) software for the segmentation of target volumes, such as cancerous tumors and organs at risk in medical imaging datasets, particularly those generated by computer tomography (CT) or magnetic resonance imaging (MRI).

In particular, the present disclosure relates to the treatment planning procedure for radiation therapy, particularly the contouring of target volumes and organs at risk (OARs), to provide accurate and robust dose estimates, in a shorter amount of time.

### DISCUSSION ON RELATED ART

The background description provided herein is for generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

The treatment planning procedure for radiotherapy involves the careful delineation and contouring of organ and target volumes. This step is crucial in ensuring accurate and effective radiation dose delivery. Organ contouring refers to the process of outlining the boundaries of organs at risk (OARs) in the body, such as the spinal cord, lungs, and heart. Target volume contouring involves outlining the tumor or the area where the radiation is intended to be delivered.

Traditionally, the clinical manual procedure of performing contouring for radiotherapy involves the use of medical imaging, such as CT and MRI scans, to visualize the patient's anatomy. Radiation oncologists and medical physicists manually review and mark organs and target volumes on images using specialized software. This process directly affects radiation dose distribution and the protection of healthy tissues.

The contouring process in the clinical manual procedure involves careful consideration of various factors, such as the location, size, and shape of the tumor, as well as the proximity of critical structures. The radiation oncology team collaborates to ensure consistent and accurate contouring across patients. This manual procedure can be time consuming, subjective, and prone to errors.

By incorporating AI algorithms and iterative adjustments, the invention offers the potential for more efficient and accurate contouring in radiotherapy treatment planning. It has the potential to improve treatment outcomes and optimize radiation delivery, ultimately benefiting patients and healthcare providers.

In connection with the prior art from patent literature, WO2016059385A1 discloses a method for optimizing the segmentation of a tumor in medical images, specifically using computer tomography (CT) or magnetic resonance imaging (MRI). The method involves three main steps:
- Calculation step - parameters associated with the image, such as tumor size, geometry, homogeneity, intensity, or texture are calculated.
- Prediction step - regarding the most accurate automatic segmentation method among a set of methods, based on the calculated parameters and a set of rules.
- Segmentation step - using the automatic segmentation method predicted to be most accurate.

The limitations of this method may include:
- Dependency on training data - if the training data is not diverse or comprehensive enough, the predictions may be less accurate for new, unseen images.
- Sensitivity to parameter calculations - the inaccuracies in parameter estimations may affect the segmentation results.
- Limited to the evaluated segmentation methods - by the set of automatic segmentation methods evaluated during the training phase.
- Applicability to specific tumor types - the performance is optimized for specific regions, like head and neck tumors, and its performance decreases for tumors placed in other anatomical locations.

WO2022126475A1 discloses a system, method, and computer-readable medium pertaining to clinical target contouring in radiotherapy, utilizing a combination of imaging data and a machine learning-based target volume segmentation model. The key components and operations include obtaining target images of a subject, acquiring a pre-trained target volume segmentation model, and determining boundary information for the target volume based on the images and the segmentation model.

The disclosed information in this document provides a detailed system and method for clinical target contouring but lacks information on the specific machine learning techniques, data sources, or the specific contouring guidelines used, the effectiveness of the system is dependent on the quality of the training data and the accuracy of the contouring guidelines, and the complexity of the system may require substantial computational resources and expertise for implementation.

The method described in the present invention leverages state-of-the-art deep learning algorithms, ensuring a greater accuracy in the automatic segmentation of tumor volumes and organ-at-risk within medical images. This robust technological foundation sets it apart from WO2016059385A1, which relies on a more traditional approach involving calculated parameters.

In contrast to WO2016059385A1 and WO2022126475A1, the method from the present invention is tailored for precise clinical oncology contouring. It stands out by providing more accurate results and seamlessly integrating with PACS systems. With robust security protocols and a user-friendly training program, it's designed to be more user-centric than existing solutions in the field.

From a commercial perspective, several similar solutions have been identified in the field of medical imaging and segmentation, closely related to the method described herein. These solutions offer automated segmentation and contouring capabilities for various anatomical structures on CT and MR images. Below is an overview of three such solutions, highlighting their validated applications, Dice Similarity Coefficients (DSC), and contouring/segmentation times. A comparative analysis is also provided to underscore their distinctive features and potential limitations:
a) Contour ProtégéAITM (MIM Software Inc.)
   Validated for: Automated segmentation and contouring of normal structures on CT and MR images (40 validated targets)
   DSC (Dice Similarity Coefficient): 0.34 - 0.96
   Contouring/Segmentation Time: 3-8 minutes vs. 180 minutes
b) RayStation^{®} (RaySearch Laboratories)
   Validated for: Delineation of anatomical structures in CT, CBCT, and MR image sets for male pelvis segmentation, of organs at risk, and target volumes (5 validated targets)
   DSC (Dice Similarity Coefficient): 0.65 - 0.84
   Contouring/Segmentation Time: <1 minute vs. 90 minutes
c) SPICE (Philips)
   Validated for: Accurate segmentation of normal and target tissues from head and neck, thorax, prostate, and abdominal CT images (38 validated targets)
   DSC (Dice Similarity Coefficient): 0.67 - 0.90
   Contouring/Segmentation Time: 3-11 minutes vs. 25-162 minutes

Contour ProtégéAITM offers automated segmentation across a broad range of targets, albeit with a lengthier contouring time compared to its counterparts. RayStation^{®} provides swift delineation for male pelvis segmentation, catering to specific applications. SPICE (Philips) accurately segments diverse tissues, though its contouring time exhibits variability across regions. Contour ProtégéAITM's extended contouring time may impact operational efficiency, particularly in time-sensitive scenarios. RayStation^{®} is confined to male pelvis segmentation, limiting its versatility for broader applications. SPICE (Philips) experiences inconsistency in contouring time, introducing challenges to workflow predictability.

In all of the related art, there is currently no intelligent and efficient method of adjusting and refining the automatically generated contours, forcing doctors to rely on inefficient manual methods. In the end, they often find it faster to redraw the contours manually from scratch, discarding the initial predictions entirely.

It is, therefore, an object of the present invention to seek to alleviate the above identified problems by enhancing precision in tumor and organ segmentation with Computer-Aided Detection software.

### OBJECT OF THE INVENTION

The object of the invention is to enhance medical imaging processes, specifically focusing on the precise and efficient automated segmentation of tumor volumes and organs-at-risk in CT or MRI scans. This innovative method seamlessly integrates with PACS systems, ensuring compatibility with existing healthcare infrastructure, while also adhering to stringent security standards. The primary goal is to provide detailed information essential for accurate clinical evaluation, thereby contributing significantly to the optimization of the radiotherapy treatment planning process. By streamlining and improving the segmentation of medical images, the invention aims to facilitate more effective and targeted radiotherapy treatments, ultimately advancing patient care in the field of oncology.

### SUMMARY OF THE INVENTION

The present disclosure introduces a system for performing an interactive tumor and/or organ-at-risk contouring process for radiotherapy treatment planning, comprising an initial auto-contouring process using a machine learning algorithm, a user reviewing and editing process of the initial predictions using contouring, tools such as brush, pen, select or others and an auto-refining process for updating the initial predictions based on edits using a machine learning algorithm.

According to one embodiment of the system, the initial segmentation process generates initial contour predictions and image features extracted from the large machine learning model.

According to another embodiment of the system, the reviewing and editing process uses manual contouring tools to generate the user corrections.

According to yet another embodiment of the system, the auto-refining process updates the initial contour predictions based on image features and corrections resulted from the reviewing and editing process.

Another object of the invention consists of a computer-implemented method for refining contour predictions in radiotherapy treatment planning, comprising:
➢ performing an initial segmentation process to generate initial contour predictions and image features;
➢ displaying the initial contour predictions in a medical image viewer and editor interface;
➢ receiving prompts to the contour predictions from the user, in form of contour corrections;
➢ refining the initial predictions using image features and the contour corrections; and
➢ displaying the refined predictions in the medical image viewer and editor interface.

According to one embodiment of the computer-implemented method, the generation of baseline contour predictions is done by a machine learning model.

According to another embodiment of the computer-implemented method, the prompts/ contour corrections are performed using contouring tools such as brush, pen, select, or others.

According to yet another embodiment of the computer-implemented method, the refined predictions are generated from the initial contour prediction, image features and contour corrections using a machine learning model.

Another object of the invention consists of a prompt-based deep learning algorithm for auto-contouring of normal and/or target structures for radiotherapy treatment planning, comprising:
➢ a large machine learning model for medical image segmentation;
➢ a medical image viewer and editor for user reviews and corrections; and
➢ a fast machine learning model for performing refined predictions based on the corrections made in the medical image viewer.

According to one embodiment of the prompt-based deep learning algorithm, the large machine learning model provides initial contour predictions and a set of features used in the refinement process.

According to another embodiment of the prompt-based deep learning algorithm, the medical image viewer and editor interface allows for user corrections via contouring tools such as brush, pen, select or others.

Another to yet another embodiment of the prompt-based deep learning algorithm, the fast machine learning model provides refined predictions based on the current prediction, corrections made by the user in the medical image editor, and features provided by the large machine learning model.

### BRIEF DESCRIPTION OF THE FIGURES

Aspects of the invention will now be described, by way of example, with reference to the following Figures, in which:
FIGURE 1 represents the initial segmentation process in which the two workflows are marked with solid and dashed lines, respectively.
FIGURE 2 represents the iterative correction process in which the two workflows are marked with solid and dashed lines, respectively.

### DETAILED DESCRIPTION OF THE INVENTION

In the following detailed description, details are set forth by way of examples to provide a thorough understanding of the relevant disclosure. However, it should be apparent to those skilled in the art that the present disclosure may be practiced without such details. The present disclosure is not limited to the embodiments shown, but to be accorded the widest scope consistent with the claims.

The method described herein may be implemented as a software and may be stored in any type of non-transitory computer-readable medium or another storage device, such as a compact disc, a digital video disc, a flash drive, a magnetic disc, or any other tangible medium, or as a digital download.

Such software code may be stored, partially or fully, on a storage device of the executing computing device, for execution by the computing device.

The term "image" in the present description is used to collectively refer to image data (e.g., scan data, projection data) and/or images of various forms, including a two-dimensional (2D) image, a three-dimensional (3D) image, a four-dimensional (4D), etc.

The term "region", "location" and "area" in the present description may refer to a location of an anatomical structure shown in the image or an actual location of the anatomical structure existing in or on the subject's body, since the image may indicate the actual location of a certain anatomical structure existing in or on the subject's body.

The present disclosure relates to a a software solution for providing an interactive framework under which an user (medical doctor) and AI algorithms iteratively improve the baseline contouring predictions given by e.g. an automatic contouring machine learning model.

The invention described in this application aims to enhance the contouring process by incorporating an interactive framework for performing corrections on existing contour predictions. The system utilizes incremental visual prompts in the form of local corrections to refine the initial contour predictions made by conventional machine learning models.

The following presents a simplified summary of one or more embodiments of the present disclosure to provide a basic understanding of such embodiments. This summary is not an extensive overview of all contemplated embodiments and is intended to neither identify key or critical elements of all embodiments, nor delineate the scope of any or all embodiments.

In one embodiment, the invention may incorporate a large machine learning model for medical image segmentation, for performing baseline predictions and providing an accurate set of features for making corrections.

In one embodiment, the invention may incorporate a medical image viewer and editor, used as an interface for performing iterative corrections in form of local corrections using various classical tools, such as brush, pen, Boolean operators, margins, and so on. The viewer may be coupled with a backend through an API, which handles the communication throughout the revision session and manages the machine learning models.

In one embodiment, the invention may incorporate a second machine learning model for improved predictions based on (a) the current prediction, (b) the new corrections, obtained through the medical image viewer and editor, and (c) the features provided by the large machine learning model. The model is smaller in size compared to the initial machine learning model, to improve the inference time and to ensure quick iterations and inference times. The model iteratively adjusts the current prediction and provides a refined prediction that is coherent with the corrections done across time.

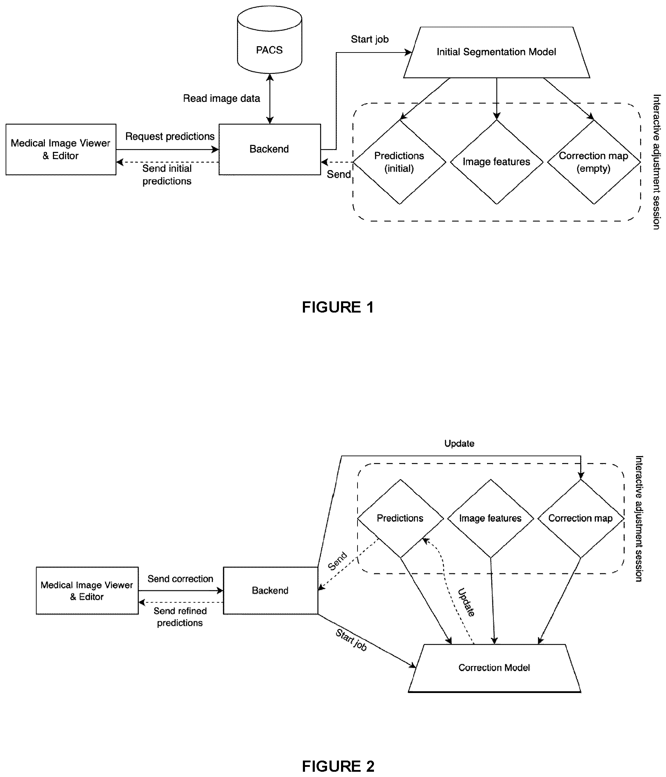

Fig. 1-2 show the logic of the interaction system. The two distinct processes are: the initial segmentation process and the iterative correction process.

The Initial Segmentation process runs the large segmentation model on the image data that is read from a database (e.g., PACS), and builds an "Interactive adjustment session" composed of (a) the base prediction; (b) image features extracted from the segmentation model; (c) a correction map, initially empty.

The method is using PACS, picture archiving and communication system, to securely store and digitally transmit electronic images and clinically relevant reports.

The Iterative Correction process continuously updates the correction map, as well as the (refined) predictions, using a Correction Model. The correction batch is being sent to the Backend, which uses this information to update the Correction map inside the Interactive adjustment session previously created by the Initial Segmentation process.

Then, the session is fed as input to the Correction Model. This, in turn, computes adjusted predictions, which are coherent with the (newly updated) correction map. The session is then updated with the refined predictions, which are then sent back to the Medical Image Viewer through the Backend. The user then may further analyze the refined prediction, make further corrections as necessary, and re-trigger the Iterative Correction process, until no more corrections are needed.

The "Medical Image Viewer & Editor" component guides the interaction between the medical specialist and the backend and AI systems. It provides a user interface that allows the user to view the medical images, request predictions, as well as perform corrections with the available tools and request refined predictions. The Medical Image Viewer & Editor communicates with the Backend component via an API. This communication channel transmits the initial predictions, as well as corrections and refined predictions guides the interaction between the medical specialist and the backend and AI systems. It provides a user interface that allows the user to view the medical images, request predictions, as well as perform corrections with the available tools and request refined predictions.

The "Backend" component acts as a gateway between the medical image viewer, the medical image database (e.g., PACS), and the machine learning models. For each Interactive Adjustment process, it maintains a session holding the necessary information for the Correction Model to perform iterative adjustments. The Backend provides a manager for the Interactive adjustment session(s) that are being created while using the framework.

The "Initial Segmentation Model" is a large predictive model for medical image segmentation. It is trained via conventional supervised learning approaches, using labeled medical images as training data. The Initial Segmentation Model is generally thought of as a larger, more proficient model that has two purposes: (a) provides accurate initial predictions in the form of binary segmentation mask; (b) provides a high-quality set of features as a by-product. The (initial) predictions, as well as the image features resulted from running the inference job on the Initial Segmentation Model are persisted in an **Interactive adjustment session.** A (currently) empty correction map is initialized as well, and incorporated into the session, to track further corrections coming from the user.

The "Correction Model" consists of a smaller generative model for adjusting predictions. The Correction Model is trained on supervised learning fashion, on the task of masked prediction. It receives as input an Interactive adjustment session, comprised of a prediction, the (fixed) image features obtained from the Initial Segmentation Model, as well as a correction map. The model is trained to provide refined predictions that are accurate with respect to the input features, as well as coherent with the correction map.

The reconstruction process is made possible through a process like current state of-the-art image generation techniques given masked images.

The Iterative Correction process is a key part of the invention. As this process is called repeatedly, it is imperative for the total time between sending the corrections and receiving the refined predictions to be as small as possible, to ensure quick iterations. Several techniques may be employed to optimize the latency of the Iterative Correction process, including (a) persisting the processed image features obtained from the Initial Segmentation Model; (b) sending corrections and refined predictions in differential format, to reduce network overhead; (c) employing a smaller Correction Model architecture, to obtain a quicker inference time. The recommended maximum inference time for the inference using the Correction Model is 2 seconds per iteration, and the total time of the process should be less than 5 seconds, to ensure quick interactivity. For reference, an NVIDIA RTX 3070 GPU supports a maximum of 20.31 TFLOPS, which means that the total number of floating-point operations should ideally be less than 30 billion, considering a throughput of 75% throughout one iteration.

The Correction Model may also ultimately run inside the client machines (if the client machine specifications permit performing efficient machine learning inference) to eliminate any network overheads. This would allow an iteration to be performed in less than one second, on a computer with mid- to high-end GPUs.

We provide one possible reference implementation of the invention, separating each of the components mentioned in the previous section. This illustrates how the invention may be used in a practical scenario, inside a clinical pipeline. We opt for a reference implementation that leverages a modern and high-performance technology stack, using industry-backed frameworks such as React, PyTorch, FastAPI, and Redis.

One reference implementation of the Medical Image Viewer & Editor component may consist of a web-based user interface, written as a single-page app, using a Javascript framework such as React to support interactivity. The web interface should also contain a study browser, populated in accordance to the database, fed through the API of the Backend. The web application also allows low-latency full-duplex communication with the Backend through WebSockets.

One reference implementation of the Backend component may consist of a server written in the Python programming language, using a library such as FastAPI for exposing a REST API interface for general use, as well as a WebSocket endpoint for full-duplex communication required throughout the Interactive Correction process.

Additionally, the system should be designed to support integration with existing medical imaging software and databases, such as Picture Archiving and Communication Systems (PACS), to streamline the data retrieval and storage processes. Implementing strict privacy measures, including data encryption and access control, will ensure compliance with applicable privacy regulations and protect patient information throughout the entire process.

Furthermore, the Backend should be able to store the Interactive adjustment session(s) in-memory for quick read access, or employ a more robust caching solution, such as Redis, to ensure scalability. The Backend may also host and manage the Machine learning models, to reduce the number of network hops required when triggering the Iterative Correction process.

One reference implementation of the invention may involve the use of a Python-based deep learning framework, such as TensorFlow or PyTorch, for training, benchmarking, and deploying the Initial Segmentation and Correction machine learning models. The models can be trained on a high-performance computing (HPC) cluster or cloud-based infrastructure to handle large-scale medical image datasets.

The Initial Segmentation Model architecture may be implemented as an encoder decoder-like architecture (U-Net or similar), by alternating Transformer layers with Convolutional layers. In order to improve efficiency, a two-phase segmentation may be employed:
1. First, a detection phase computes bounding boxes for each of the target labels;
2. Second, features from each depth of the decoder may be cropped to the bounding box and fed to the decoder, to reduce the dimensionality of the input space and label sparsity.

The Correction Model architecture may be implemented as a light decoder (compatible with the detector of the Initial Segmentation Model described above). The decoder would receive features from each layer of the Segmentation Model encoder, as well as the (masked) label, cropped to the detection bounding box. The correction Model should output a refined label as a binary mask, that is coherent with the unmasked bits of the (masked) input label. The model may be trained in a supervised fashion, by simulating adjustment sessions: starting from a base prediction, one may generate artificial corrections by iteratively replacing bits of the prediction with the available ground truth mask and train the model to (better) predict the true mask.

Access to patient data and medical images is a critical aspect of the present invention. The system ensures that authorized personnel, such as medical professionals and researchers, have access to the necessary data for contouring and treatment planning purposes.

For training purposes, the system uses anonymized datasets in DICOM format. For use purposes, the same DICOM format is used. However, data encryption methods are employed at the client side to ensure that the sensitive clinical data is stripped and not accessible to unauthorized parties.

Privacy is a paramount concern in the development and implementation of the present invention. The system ensures that patient data and medical images are handled with the utmost care and in compliance with all applicable privacy regulations. Access to patient information is strictly controlled, and data encryption measures are implemented at the client side to protect data transmission and storage before they are sent to be processed inside the Backend.

Furthermore, the system incorporates robust authentication and authorization protocols to prevent unauthorized access to patient data.

## Claims

1. A system for performing an interactive tumor and/or organ-at-risk contouring process for radiotherapy treatment planning, comprising:
• an initial auto-contouring process using a machine learning algorithm;
• a user reviewing and editing process of the initial predictions using contouring.
• tools such as brush, pen, select or others; and
• an auto-refining process for updating the initial predictions based on edits using a machine learning algorithm.

2. The system of claim 1, wherein the initial segmentation process generates initial contour predictions and image features extracted from the large machine learning model.

3. The system of claim 1, wherein the reviewing and editing process uses manual contouring tools to generate the user corrections.

4. The system of claim 1, wherein the auto-refining process updates the initial contour predictions based on image features and corrections resulted from the reviewing and editing process.

5. A computer-implemented method for refining contour predictions in radiotherapy treatment planning, comprising:
• performing an initial segmentation process to generate initial contour predictions and image features;
• displaying the initial contour predictions in a medical image viewer and editor interface;
• receiving prompts to the contour predictions from the user, in form of contour corrections;
• refining the initial predictions using image features and the contour corrections and
• displaying the refined predictions in the medical image viewer and editor interface.

6. The method of claim 5 wherein the generation of baseline contour predictions is done by a machine learning model.

7. The method of claim 5, wherein the prompts/ contour corrections are performed using contouring tools such as brush, pen, select, or others.

8. The method of claim 5, wherein the refined predictions are generated from the initial contour prediction, image features and contour corrections using a machine learning model.

9. A prompt-based deep learning algorithm for auto-contouring of normal and/or target structures for radiotherapy treatment planning, comprising:
• a large machine learning model for medical image segmentation;
• a medical image viewer and editor for user reviews and corrections; and
• a fast machine learning model for performing refined predictions based on the corrections made in the medical image viewer.

10. The prompt-based deep learning algorithm of claim 9, wherein the large machine learning model provides initial contour predictions and a set of features used in the refinement process.

11. The prompt-based deep learning algorithm of claim 9, wherein the medical image viewer and editor interface allows for user corrections via contouring tools such as brush, pen, select or others.

12. The prompt-based deep learning algorithm of claim 9, wherein the fast machine learning model provides refined predictions based on the current prediction, corrections made by the user in the medical image editor, and features provided by the large machine learning model.
